# EUROPEAN PATENT APPLICATION

(11) **EP 4 716 276 A1**
(43) Date of publication of application: **25.03.2026**
(21) Application number: 23936954.9
(22) Date of filing: 15.05.2023
(51) Int. Cl.: H04W 16/22, G06N 3/02

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LI, Dexin, Dongguan, Guangdong 523860 (CN)
(74) Representative: Penza, Giancarlo
(86) International application number: PCT/CN2023/094366
(87) International publication number: WO 2024/234267

(57) **Abstract**

The present application relates to a communication method and device. The method comprises: a first communication device receives model quantization configuration information from a second communication device; and the first communication device executes a model quantization related operation according to the model quantization configuration information. In embodiments of the present application, the model quantization configuration information can indicate a model quantization related operation, and model quantization is realized.

## Description

### TECHNICAL FIELD

The disclosure relates to the field of communications, and particularly to a communication method and device.

### BACKGROUND

In the communication field, an artificial intelligence (AI) technology has been gradually adopted. Actual scenario requirements should be considered for applications of AI models in the communication field such as a wireless communication field. For example, the model may be required to be as small as possible and has high throughput in order to be adapted to a terminal scenario. Therefore, quantization of the AI model may be performed.

### SUMMARY

There are provided a communication method and device in embodiments of the disclosure, to implement model quantization.

There is provided a communication method in an embodiment of the disclosure, and the communication method includes the following operations.

A first communication device receives model quantization configuration information from a second communication device.

The first communication device performs an operation related to model quantization based on the model quantization configuration information.

There is provided a communication method in an embodiment of the disclosure, and the communication method includes the following operation.

A second communication device transmits model quantization configuration information to a first communication device, the model quantization configuration information indicating the second communication device to perform an operation related to model quantization.

There is provided a first communication device in an embodiment of the disclosure, and the first communication device includes a reception unit and a processing unit.

The reception unit is configured to receive model quantization configuration information from a second communication device.

The processing unit is configured to perform an operation related to model quantization based on the model quantization configuration information.

There is provided a second communication device in an embodiment of the disclosure, and the second communication device includes a transmission unit.

The transmission unit is configured to transmit model quantization configuration information to a first communication device, the model quantization configuration information indicating the second communication device to perform an operation related to model quantization.

There is provided a communication device in an embodiment of the disclosure, and the communication device includes a processor and a memory. The memory is configured to store a computer program, and the processor is configured to call the computer program stored in the memory and run the computer program, to cause the communication device to perform the above communication methods.

There is provided a chip in an embodiment of the disclosure, and the chip is configured to implement the above communication methods. Specifically, the chip includes a processor, and the processor is configured to call a computer program from a memory and run the computer program, to cause a device mounted with the chip to perform the above communication methods.

There is provided a computer-readable storage medium in an embodiment of the disclosure. The computer-readable storage medium has stored thereon a computer program that, when being run by a device, causes the device to perform the above communication methods.

There is provided a computer program product in an embodiment of the disclosure, and the computer program product includes computer program instructions that cause a computer to perform the above communication methods.

There is provided a computer program in an embodiment of the disclosure, and the computer program, when being run on a computer, causes the computer to perform the above communication methods.

According to the embodiments of the disclosure, the operation related to the model quantization may be indicated by the model quantization configuration information, so that the model quantization can be realized.

### BRIEF DESCRIPTION OF THE DRAWINGS

FIG. 1 is a schematic diagram of an application scenario according to an embodiment of the disclosure.
FIG. 2 is a schematic diagram of a multi-layer neural network.
FIG. 3 is a schematic diagram of a channel state information feedback system.
FIG. 4A and FIG. 4B are schematic diagrams of a beam scanning process.
FIG. 5 is a schematic flowchart of a communication method according to an embodiment of the disclosure.
FIG. 6 is a schematic flowchart of a communication method according to another embodiment of the disclosure.
FIG. 7 is a schematic flowchart of a communication method according to still another embodiment of the disclosure.
FIG. 8 is a schematic flowchart of a communication method according to an embodiment of the disclosure.
FIG. 9 is a schematic flowchart of a communication method according to another embodiment of the disclosure.
FIG. 10 is a schematic flowchart of a method for indicating AI model quantization according to an embodiment of the disclosure.
FIG. 11 is a schematic flowchart of an example 1-1 according to the disclosure.
FIG. 12 is a schematic flowchart of an example 1-2 according to the disclosure.
FIG. 13 is a schematic flowchart of an example 2-1 according to the disclosure.
FIG. 14 is a schematic flowchart of an example 2-2 according to the disclosure.
FIG. 15 is a schematic flowchart of an example 3 according to the disclosure.
FIG. 16 is a schematic block diagram of a first communication device according to an embodiment of the disclosure.
FIG. 17 is a schematic block diagram of a first communication device according to another embodiment of the disclosure.
FIG. 18 is a schematic block diagram of a second communication device according to an embodiment of the disclosure.
FIG. 19 is a schematic block diagram of a second communication device according to another embodiment of the disclosure.
FIG. 20 is a schematic block diagram of a communication device according to an embodiment of the disclosure.
FIG. 21 is a schematic block diagram of a chip according to an embodiment of the disclosure.
FIG. 22 is a schematic block diagram of a communication system according to an embodiment of the disclosure.

### DETAILED DESCRIPTION

The technical solutions in the embodiments of the disclosure will be described with reference to the accompanying drawings in the embodiments of the disclosure.

The technical solutions in the embodiments of the disclosure may be applied to various communication systems, such as: a global system of mobile communication (GSM), a code division multiple access (CDMA) system, a wideband CDMA (WCDMA) system, a general packet radio service (GPRS) system, a long term evolution (LTE) system, an advanced LTE (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th generation (5G) system or other communication systems, etc.

Generally, the number of connections supported by a traditional communication system is limited and the connections are easy to be implemented. However, with the development of the communication technology, a mobile communication system will not only support traditional communications, but also support, for example, a device to device (D2D) communication, a machine to machine (M2M) communication, a machine type communication (MTC), a vehicle to vehicle (V2V) communication, or a vehicle to everything (V2X) communication, etc. The embodiments of the disclosure may also be applied to these communication systems.

In an implementation, the communication system in the embodiments of the disclosure may be applied to a carrier aggregation (CA) scenario, a dual connectivity (DC) scenario, and may also be applied to a standalone (SA) network deployment scenario.

In an implementation, the communication system in the embodiments of the disclosure may be applied to an unlicensed spectrum. The unlicensed spectrum may also be considered to be a shared spectrum. Alternatively, the communication system in the embodiments of the disclosure may also be applied to a licensed spectrum. The licensed spectrum may also be considered to be an unshared spectrum.

Various embodiments are described in combination with a network device and a terminal device in the embodiments of the disclosure. The terminal device may also be called user equipment (UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a station (ST) in the WLAN, and may be a cellular phone, a cordless phone, a session initiation protocol (SIP) phone, a wireless local loop (WLL) station, a personal digital assistant (PDA) device, a handheld device with a wireless communication function, a computing device, another processing device connected to a wireless modem, an on-board device, a wearable device, a terminal device in a next generation communication system such as the NR network, or a terminal device in a future evolved public land mobile network (PLMN) or the like.

In the embodiments of the disclosure, the terminal device may be deployed on land, including indoors or outdoors, hand-held, wearable or vehicle-mounted; or may also be deployed on the water (such as on ships); or may also be deployed in the air (such as on airplanes, balloons and satellites).

In the embodiments of the disclosure, the terminal device may be a mobile phone, a tablet computer (pad), a computer with a wireless transceiver function, a virtual reality (VR) terminal device, an augmented reality (AR) terminal device, a wireless terminal device in an industrial control, a wireless terminal device in a self-driving, a wireless terminal device in a remote medical, a wireless terminal device in a smart grid, a wireless terminal device in a transportation safety, a wireless terminal device in a smart city, or a wireless terminal device in a smart home, etc.

By way of example but not limitation, in the embodiments of the disclosure, the terminal device may also be a wearable device. The wearable device may also be referred to as a wearable smart device, which is a general name of wearable devices developed by applying wearable technology and intelligently designing daily wearable items, such as glasses, gloves, watches, clothing and shoes. The wearable device is a portable device that is worn directly on the body or integrated into the clothes or accessories of a user. The wearable device is not only a hardware device, but also can realize powerful functions through software support, data interaction and cloud interaction. Broadly defined, the wearable smart devices include those with comprehensive functions, large sizes and an ability to perform whole or partial functions independently of a smart phone, such as a smart watch or smart glasses, as well as those focused on specific application functions that require integration with another device like the smart phone, such as various smart bracelets and smart jewelry for monitoring vital signs.

In the embodiments of the disclosure, the network device may be a device for communicating with the mobile device. The network device may be an access point (AP) in the WLAN, a base transceiver station (BTS) in the GSM or CDMA, a Node B (NB) in the WCDMA, an Evolutional Node B (eNB or eNodeB) in the LTE, a relay station or an AP, a vehicle-mounted device, a wearable device, a network device (gNB) in the NR network, a network device in the future evolved PLMN network or a network device in the NTN network, etc.

By way of example and not limitation, in the embodiments of the disclosure, the network device may have a mobility characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station arranged on land, water and the like.

In the embodiments of the disclosure, the network device may provide services for a cell, and the terminal device communicates with the network device through transmission resources (e.g. frequency-domain resources or called spectrum resources) utilized by the cell. The cell may be a cell corresponding to the network device such as a base station. The cell may belong to a macro base station or to a base station corresponding to a small cell. Herein, the small cell may include: a metro cell, a micro cell, a pico cell, a femto cell, etc. These small cells have the characteristics of small coverage and low transmission power, and are suitable for providing high-speed data transmission services.

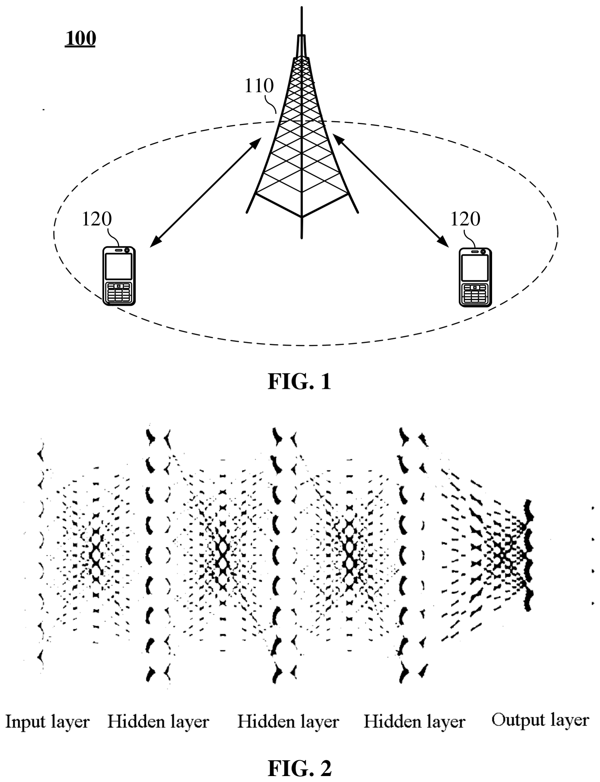

FIG. 1 illustrates a communication system 100 by way of example. The communication system includes a network device 110 and two terminal devices 120. In an implementation, the communication system 100 may include a plurality of network devices 110 and each network device 110 may cover a different number of terminal devices 120, which is not limited in the embodiments of the disclosure.

In an implementation, the communication system 100 may further include other network entities such as a mobility management entity (MME), an access and mobility management function (AMF), which is not limited in the embodiments of the disclosure.

The network device may include an access network device and a core network device. That is, the wireless communication system further includes a plurality of core networks for communicating with an access network device. The access network device may be an evolutional node B (eNB or e-NodeB for short), a macro base station, a micro base station (also referred to as a "small base station"), a pico base station, an AP, a transmission point (TP), a new generation Node B (gNodeB), or the like in the LTE system, a next generation mobile communication (NR) system or an authorized auxiliary access long-term evolution (LAA-LTE) system.

It should be understood that, a device in the network/system in the embodiments of the disclosure that has a communication function may be referred to as a communication device. Taking the communication system illustrated in FIG. 1 as an example, the communication device may include the network device and the terminal device that have communication functions. The network device and the terminal device may be specific devices in the embodiments of the disclosure, and details are not elaborated herein again. The communication device may further include other devices in the communication system, such as a network controller, an MME and other network entities, which is not limited in the embodiments of the disclosure.

It should be understood that, terms "system" and "network" are usually used interchangeably in the disclosure. The term "and/or" herein is only used to describe an association relationship between associated objects, and represents that three relationships may exist. For example, A and/or B may represent the three conditions: independent existence of A, existence of both A and B and independent existence of B. In addition, the character "/" in the disclosure usually represents that previous and next associated objects form an "or" relationship.

It should also be understood that the word "indication" mentioned in the embodiments of the disclosure may refer to a direct indication or an indirect indication, and may also be indicative of an associative relationship. For example, A indicates B, which may represent that A directly indicates B, for example, B may be obtained through A; or that A indirectly indicates B, for example, A indicates C, and B may be obtained through C; or that there is an association between A and B.

The term "correspondence" in the embodiments of the disclosure may represent that the listed items have a direct or indirect correspondence relationship, or an association relationship, or a relationship of indicating and being indicated, configuring and being configured, etc.

For ease of understanding the technical solutions in the embodiments of the disclosure, related technologies in the embodiments of the disclosure are described below. The following related technologies, used as optional solutions, may be combined with the technical solutions in the embodiments of the disclosure in various ways. Such combinations shall fall within the scope of protection of the embodiments of the disclosure.

### 1. AI

In recent years, AI research, represented by neural networks, has attained great accomplishments in many fields, and the AI research will also play an important role in people's production and life for a long time in the future. In particular, as an important research direction of the AI technology, machine learning (ML) makes use of a nonlinear processing capability of the neural network (NN), which has successfully solved a series of problems that were previously difficult to address. The ML has even demonstrated performance superior to humans in the fields such as image recognition, speech processing, natural language processing, games and so on, thereby attracting increasing attention recently.

A training model in the AI is an artificial neural network. The AI network may create a model based on training data, usually to generate more accurate predictions. The NN generally adopts a design of multiple layers. As illustrated in FIG. 2, feature learning is performed through layer-by-layer training of the multi-layer neural network, which greatly improves learning and processing capabilities of the NN, and the NN is widely used in various aspects such as pattern recognition, signal processing, optimization combination, anomaly detection.

The AI possesses important potential applications in many aspects such as complex and unknown environment modeling, learning, channel prediction, intelligent signal generation and processing, network status tracking and intelligent scheduling, network optimization deployment. It is expected to promote evolution of future communication paradigms and change of network architectures, and AI is of great significance and value for 6G technology research.

### 2. AI model quantization

In a terminal scenario, a memory and speed are generally considered, so the model is required to be as small as possible while ensuring a high throughput rate. The quantization may be used for reducing a model scale and for acceleration.

The quantization process is mainly an operation process that converts weights of a trained deep neural network and output values of activation functions of the trained deep neural network from a high precision to a low precision. For example, a model trained based on an original floating point FP32 is compressed to a model with a fixed point INT8 (or INT4/INT1). Since INT8 only requires 8 bits for representation, the corresponding model size can theoretically be reduced to 1/4 of the original size compared with the 32-bit floating point. This compression rate is very intuitive. In addition, most terminal devices may have a dedicated fixed-point computing unit, which realizes a low-precision operator with a low-bit instruction, and the speed can be greatly improved. Further, greater acceleration may also be obtained based on collaborative architecture and algorithms.

The quantization technologies may mainly include quantization aware training (QAT) and post training quantization (PTQ). The main difference between these two quantization technologies is that: the QAT involves inserting pseudo-quantization operators into the model (these operators are used to simulate logic of a low-precision operation), and fine-tuning the original floating-point model through an optimization method such as gradient descent, to obtain a model with an expected precision through adjusted parameters. The PTQ mainly obtains distribution of a network through a small amount of calibration data sets, and obtains the quantization parameter through statistical means or optimization of distribution of the floating-point and fixed-point outputs, so as to obtain a final deployed model. Both quantization methods have advantages and disadvantages. The QAT performs training based on a training logic of the original floating-point model, theoretically, the QAT can better guarantee convergence to the precision of the original model, but fine parameter adjustment is required and the production cycle is long. The PTQ only needs a small amount of calibration data, so the production cycle is short and the quantization is more flexible, however, there is a disadvantage that the precision may be slightly inferior to QAT. During an actual implementation process, it is found that most models can obtain a good model precision through the PTQ (a precision loss is within 1%, the precision improvement also benefits from optimization strategies), and a small portion of remaining models may require the QAT to compensate for the precision loss. Therefore, in actual services, the advantages and disadvantages of the two quantization methods may be considered comprehensively before application.

### 3. AI channel state information (CSI) feedback in NR system

In view of the great success of the AI technology, especially the deep learning, in fields such as computer vision, natural language processing, etc., the communication field has begun to explore the use of the deep learning to solve technical problems that are difficult to be solved by traditional communication methods. For example, the neural network architecture commonly used in the deep learning is nonlinear and data-driven. Feature extraction may be performed on actual channel matrix data and channel matrix information compressed and fed back by the UE may be restored as much as possible on the base station side. In such way, the channel information can be ensured to be restored, and the possibility for the UE side to reduce CSI feedback overhead can be provided. The deep learning-based CSI feedback regards the channel information as an image to be compressed, uses a deep learning autoencoder to compress and feed back the channel information, and reconstructs the compressed channel image at the transmitting end, which can retain the channel information to a greater extent.

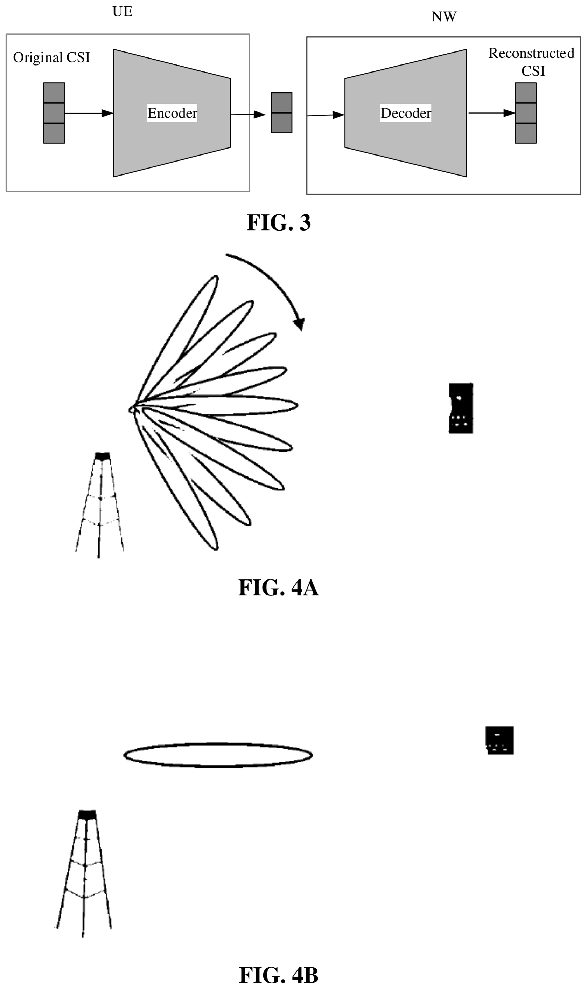

A channel state information feedback system is illustrated in FIG. 3. The system is an autoencoder structure, which is composed of an encoder portion and a decoder portion deployed at a transmitting end and a receiving end respectively. After the transmitting end obtains the channel information through channel estimation, the channel information matrix is compressed and encoded by the neural network of the encoder, and the compressed bitstream is fed back to the receiving end through an air interface feedback link. The receiving end recovers the channel information based on the fed-back bitstream through the decoder, to obtain complete feedback channel information. Network model structures inside the encoder and decoder illustrated in FIG. 3 may be flexibly designed.

### 4. AI beam management in NR system

The first version of the NR system, i.e., Rel.15, introduced communication in a millimeter wave frequency band, that is, introduced a responsive beam management mechanism. In simple terms, the beam management mechanism may be divided into uplink and downlink beam managements. The solution in the embodiments of the disclosure mainly focuses on a quantization operation in a model transmission, and there is no essential difference between uplink and downlink in the model transmission. Therefore, the downlink beam management mechanism is mainly introduced below. The mechanism includes procedures such as downlink beam scanning, optimal beam reporting by UE, and network (NW) indication of downlink beams.

The downlink beam scanning procedure may include that: the NW scans different transmitting beam directions using a downlink reference signal, a synchronization signal and physical broadcast channel (PBCH) block (SSB) and/or a channel state information-reference signal (CSI-RS). The UE may use different receiving beams for measurement, so that all combinations of beam pairs can be traversed, and the UE calculates its layer 1 (L1)-reference signal receiving power (RSRP) value.

FIG. 4A and FIG. 4B illustrate schematic diagrams of a beam scanning process. FIG. 4A illustrates traversing transmitting beams and receiving beams. FIG. 4B illustrates traversing receiving beams for a particular transmitting beam.

The beam reporting may include that: the UE selects K transmitting beams with the highest L1-RSRP values by comparing the L1-RSRP values of all measured beam pairs, and then reports the K transmitting beams to the NW as uplink control information. Herein, L1-RSRP may also be replaced with other beam link indicators, such as an L1-signal to interference plus noise ratio (SINR), an L1-reference signal reception quality (RSRQ), and the like. After decoding the beam reporting from the UE, the NW may carry a transmission configuration indicator (TCI) status (including an SSB or a CSI-RS as the referenced transmitting beam) through a media access control (MAC) or downlink control information (DCI) signaling, to indicate the beam to the UE. The UE performs reception by using a receiving beam corresponding to the transmitting beam.

The AI-based beam management is one of the main use cases for AI projects. An implementation framework for an AI-based spatial domain beam prediction and temporal domain prediction may include the following portions.

Beam prediction is performed on a beam set A based on a measurement result on a beam set B.

The set B may be a subset of the set A, or the set B and the set A may be different beam sets (e.g., the set A adopts narrow beams and the set B adopts wide beams).

The AI model may be deployed on the NW side or the UE side.

The measurement result on the set B may be the L1-RSRP, or other auxiliary information such as beam (pair) identifier (ID), etc.

Although R18 discusses and studies technical solutions for AI model enhancement, including different AI model training processes and AI model transmission methods, the AI model quantization is not discussed in detail. The parameter precision of the AI model depends on the training framework. Generally, a precision type of the model parameter saved by the framework by default is FLOPP32 (32-bit single-precision floating-point type). An AI model with a high-precision parameter has a higher memory footprint and a smaller computational density, and an inference process requires a larger number of memory accesses. A bottleneck in an AI model inference efficiency typically lies not in calculation but in memory access. In such cases, if the AI model quantization is not considered, the lower computational density would be relatively more time-consuming. Meanwhile, the power consumption mainly stems from calculation and memory access, and the computational energy consumption differs by orders of magnitude before and after the model quantization.

Accordingly, it is necessary to fully consider actual scenario requirements before the AI solution is widely promoted and implemented in the wireless field, to ensure an inference precision loss remaining within a required range while minimizing the model size. Therefore, it is necessary to effectively quantize the model, to meet the challenge of limited hardware resources of the system itself.

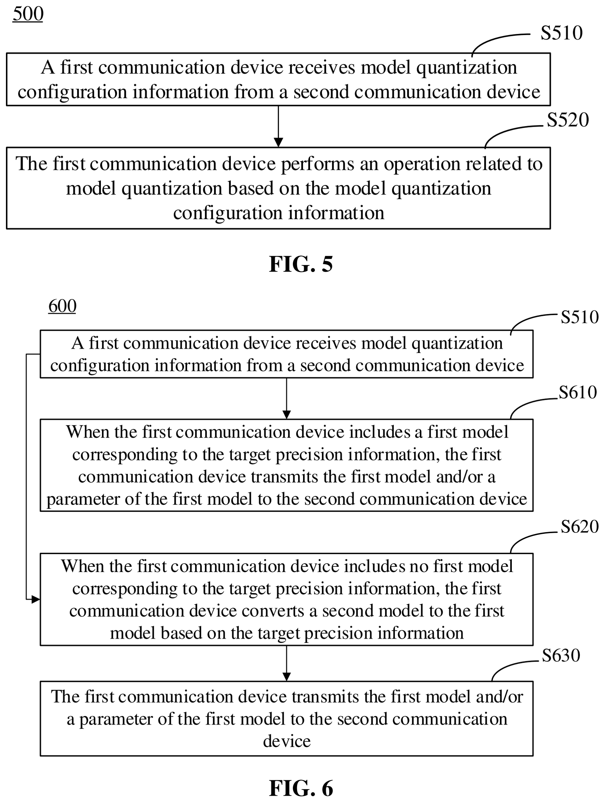

FIG. 5 is a schematic flowchart of a communication method according to an embodiment of the disclosure. Optionally, the method 500 may be applied to the system illustrated in FIG. 1, but is not limited thereto. The method includes at least part of the following content.

At S510, a first communication device receives model quantization configuration information from a second communication device.

At S520, the first communication device performs an operation related to model quantization based on the model quantization configuration information.

In the embodiments of the present application, the model may be an AI model. For example, the model may be a CSI prediction model, a beam prediction model, a UE positioning model, a channel estimation model, and the like. The first communication device may be a terminal device or a network device. The second communication device may be a terminal device or a network device. If the first communication device and the second communication device have associated AI models or the same AI model, the second communication device may transmit the model quantization configuration information to the first communication device. The model quantization configuration information may include information related to quantization of the AI model in the first communication device, for example, including one or more of: a name, a function, a parameter to be quantized, quantization precision information, of the model, and the like.

In the embodiment of the disclosure, the operation related to model quantization may be indicate by the model quantization configuration information, to effectively realize the model quantization. For example, a quantized model or a quantized model parameter may be transmitted between communication devices through the model quantization configuration information. The size of the quantized AI model may be reduced exponentially, which can greatly reduce an air interface transmission overhead, reduce a hardware memory and a storage occupation, reduce a device power consumption, and can also improve a model inference efficiency.

FIG. 6 is a schematic flowchart of a communication method according to another embodiment of the disclosure. The method 600 may include one or more features of the communication method in the above embodiment. In an implementation, the model quantization configuration information includes target precision information. The target precision information in the model quantization configuration information transmitted by the second communication device may be understood as a model precision requirement of the second communication device.

In an embodiment of the disclosure, an initial parameter precision of the AI model depends on the training framework. For example, a training precision type of some models may be a 32-bit single-precision floating-point type or other types. The parameter precision that is obtained after quantization of the trained AI model may be different from the initial parameter precision, for example, may be lower than the initial parameter precision. The same AI model may be converted into AI models with different parameter precisions by adopting different quantization methods and/or quantization precisions. For example, the quantization precision type of the quantized AI model may include a signed 8-bit integer (Int8) and an unsigned 8-bit integer (UInt8).

In an embodiment of the disclosure, the target precision information included in the model quantization configuration information may be used for checking whether there is a model in the first communication device that meets requirements. The target precision information may include a target precision type such as Int8 or UInt8, or may include indication information corresponding to the target precision type. For example, 0 indicates Int8 and 1 indicates UInt8; or 1 indicates Int8 and 0 indicates UInt8. One target precision type may correspond to one parameter or a plurality of parameters of the model.

In an implementation, the target precision information includes one or more of: a target quantization precision of an activation parameter, a target quantization precision of a bias parameter, or a target quantization precision of a weight parameter.

In an embodiment of the disclosure, the AI model may include a plurality of types of parameters, and the types of the parameters, in different AI models, that may be quantized may be the same or different. For example, the parameter of the AI model may include, but is not limited to, one or more of the activation parameter, the bias parameter, or the weight parameter. The AI model may be quantized based on one or more of the activation parameter, the bias parameter, or the weight parameter, to obtain one or more quantized models.

If the model quantization configuration information received by the first communication device includes the target precision information, the first communication device may check whether there is an AI model corresponding to the target precision information. The target precision information may be indicated in a variety of ways, and examples are illustrated as follows.

First manner: the model parameters may not be divided into the weight parameter and the activation parameter, the following quantization data types are supported, and 1 bit may be used in the AI model quantization indicator configuration (AIMQIC) to indicate the target precision information. An example of the quantization data type includes: 0, Int8 (QuantType.QInt8): a signed 8-bit integer; and 1, UInt8 (QuantType.QUInt8): an unsigned 8-bit integer.

In this manner, the types corresponding to 0 and 1 may be interchanged. There is no need to divide the model into multiple portions, and all the parameters may support the same quantization precision.

Second manner: the model parameters are divided into the activation parameter, the bias parameter and the weight parameter. The following quantization data types are supported, and 3 bits may be used in AIMQIC to indicate the target precision information.
Int8 (QuantType.QInt8): a signed 8-bit integer.
UInt8 (QuantType.QUInt8): an unsigned 8-bit integer.

An example for indicating the target precision information using 3 bits in AIMQIC is as follows.
000: U8U8U8, (activation: uint8, bias: uint8, weight: uint8);
001: U8U8S8, (activation: uint8, bias: uint8, weight: int8);
010: U8S8U8, (activation: uint8, bias: int8, weight: uint8);
011: U8S8S8, (activation: uint8, bias: int8, weight: int8);
100: S8U8U8, (activation: int8, bias: uint8, weight: uint8);
101: S8U8S8, (activation: int8, bias: uint8, weight: int8);
110: S8S8U8, (activation: int8, bias: int8, weight: uint8); and
111: S8S8S8, (activation: int8, bias: int8, weight: int8).

In this manner, the 3-bit value in the AIMQIC and the parameter precision type corresponding to the value may vary, and the model is divided into several detailed portions to support different quantization precisions respectively.

Third manner: the model parameters are not divided into one or more of the activation parameter, the bias parameter and the weight parameter, and the following quantization data types are supported. In this manner, 2 bits may be used in the AIMQIC to indicate the target precision information, and an example of the quantization data types is as follows.
00: Int8 (QuantType.QInt8): a signed 8-bit integer;
01: UInt8 (QuantType.QUInt8): an unsigned 8-bit integer;
10: Float8 (QuantType.QFloat8): an 8-bit single-precision floating point type; and
11: Float16 (QuantType.QFloat16): a 16-bit single-precision floating point type.

In this manner, the 2-bit value in the AIMQIC and the parameter precision type corresponding to the value may vary, and fewer or more bits may be used to represent coarser or finer model quantization precision requirements.

In addition, the AIMQIC may indicate the target precision information of the activation parameter, the bias parameter, or the weight parameter independently. The AIMQIC may also indicate the target precision information of any two of the activation parameter, the bias parameter, and the weight parameter.

In an implementation, the model quantization precision requirement supported by the first communication device may include a global quantization precision.

In an implementation, the model quantization precision supported by the first communication device includes one or more of: a quantization precision of the activation parameter, a quantization precision of the bias parameter, or a quantization precision of the weight parameter.

In an embodiment of the disclosure, the model quantization precision may include one or more quantization precisions related to one or more model parameters, or may be the global quantization precision of the model.

For example, a model A is quantized to obtain a model A1 and a model A2, where the quantization precision of the model A1 is Int8 and the quantization precision of the model A2 is UInt8. The model A, the model A1 and the model A2 may be models having the same function but different parameters.

For another example, a model B is quantized to obtain a model B1, a model B2, and a model B3, where the quantization precision of the activation parameter of the model B1 is Int8, and the quantization precision of the weight parameter of the model B1 is Float8; the quantization precision of the activation parameter of the model B2 is UInt8, and the quantization precision of the weight parameter of the model B2 is Float8; the quantization precision of the activation parameter of the model B3 is UInt8, and the quantization precision of the weight parameter of the model B3 is Float16. The model B, the model B1, the model B2 and the model B3 may be models having the same function but different parameters.

In an implementation, as illustrated in FIG. 6, the operation S520 may further include an operation S610.

At S610, when the first communication device includes a first model corresponding to the target precision information, the first communication device transmits the first model and/or a parameter of the first model to the second communication device.

For example, the model quantization configuration information received by the first communication device includes model name information of A and an indication bit 1 corresponding to the target precision information of Int8. The first communication device finds a model A1 (a quantization precision of which is Int8) that matches the target precision information in the model quantization configuration information.

For example, the model quantization configuration information received by the first communication device includes: model name information of B, quantization parameters being the activation parameter and the weight parameter, the target quantization precision of Int8 for the activation parameter, and the target quantization precision of Float8 for the weight parameter. The first communication device finds a model B2 (the quantization precision of the activation parameter is UInt8, and the quantization precision of the weight parameter is Float8) that matches the target precision information in the model quantization configuration information.

In an implementation, as illustrated in FIG. 6, the operation S520 may further include operations S620 and S630.

At S620, when the first communication device includes no first model corresponding to the target precision information, the first communication device converts a second model to the first model based on the target precision information.

At S630, the first communication device transmits the first model and/or a parameter of the first model to the second communication device.

In the model quantization precision requirements supported by the first communication device, if there are no requirement that matches the target precision information, the first communication device may first quantize the model based on the target precision information to obtain a model that matches the target precision information. Then, the first communication device transmits the model that matches the target precision information to the second communication device. For example, the model quantization configuration information includes the model name information of A and the target quantization precision of Float8. However, the first communication device has only a model A1 with the quantization precision of Int8 and a model A2 with the quantization precision of UInt8, in this case, the first communication device may convert the model A to a model A3 with the quantization precision of Float8.

After obtaining the first model corresponding to the target precision information, the first communication device transmits, to the second communication device, the first model corresponding to the target precision information or a parameter of the first model. For example, if there is no model for a certain function in the second communication device, the first communication device may transmit the first model having the function to the second communication device. If there is a model for a certain function in the second communication device, the first communication device may transmit the parameter of the first model to the second communication device to update the parameter of the original model.

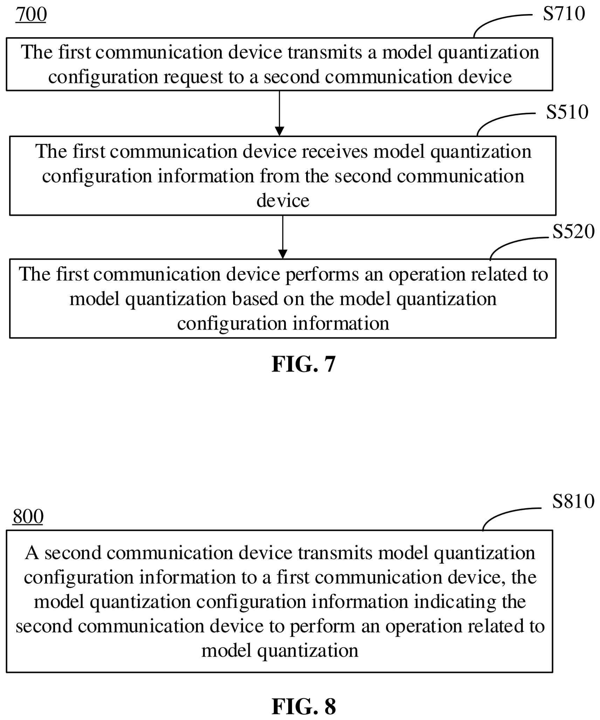

FIG. 7 is a schematic flowchart of a communication method according to another embodiment of the disclosure. The method 700 may include one or more features of the communication method in the above embodiment. In an implementation, as illustrated in FIG. 7, the method may further include an operation S710.

At S710, the first communication device transmits a model quantization configuration request to the second communication device.

In an embodiment of the disclosure, the first communication device may first transmit the model quantization configuration request to the second communication device, and the second communication device may return the model quantization configuration information in response to the model quantization configuration request. The second communication device may also actively transmit the model quantization configuration information, with reference to S510.

In an implementation, the first model is obtained based on a model trained by the first communication device or a sub-model of the model trained by the first communication device. In an embodiment of the disclosure, the first model transmitted by the first communication device to the second communication device may be a model quantized based on a trained complete model, or may be a model quantized based on a sub-model of the trained complete model. For example, the trained complete model is a CSI model, and the CSI model includes an encoder model and a decoder model.

In an implementation, the first communication device is a network device, and the second communication device is a terminal device.

In an implementation, the first model is an encoder model of a CSI model, and the CSI model is trained on the network device and is deployed on the network device and/or the terminal device. For example, the encoder model and the decoder model of the CSI model are trained and obtained on the network device, and then the model quantization is performed. If the network device has a encoder model corresponding to the received target precision information of the CSI model, the network device may transmit the encoder model or a parameter of the encoder model to the terminal device.

In an implementation, the first communication device is a terminal device, and the second communication device is a network device.

In an implementation, the first model is a decoder model of a CSI model, and the CSI model is trained on the terminal device and is deployed on the network device and/or the terminal device. For example, the encoder model and the decoder model of the CSI model are trained and obtained on the terminal device, and then the model quantization is performed. If the terminal device has a decoder model corresponding to the received target precision information of the CSI model, the terminal device may transmit the decoder model or a parameter of the decoder model to the terminal device.

In an implementation, the first communication device is a first terminal device, and the second communication device is a second terminal device.

In an implementation, the first model is an encoder model and/or a decoder model of a CSI model, and the CSI model is trained on the first terminal device and is deployed on the first terminal device and/or the second terminal device. For example, the encoder model and the decoder model of the CSI model are trained and obtained on the first terminal device, and then the model quantization is performed. If the first terminal device has a encoder model and/or a decoder model corresponding to the received target precision information of the CSI model, the first terminal device may transmit the encoder model and/or the decoder model, or a parameter of the encoder model and/or a parameter of the decoder model to the second terminal device.

FIG. 8 is a schematic flowchart of a communication method according to an embodiment of the disclosure. Optionally, the method 800 may be applied to the system illustrated in FIG. 1, but is not limited thereto. The method includes at least part of the following content.

At S810, a second communication device transmits model quantization configuration information to a first communication device, the model quantization configuration information indicating the second communication device to perform an operation related to model quantization.

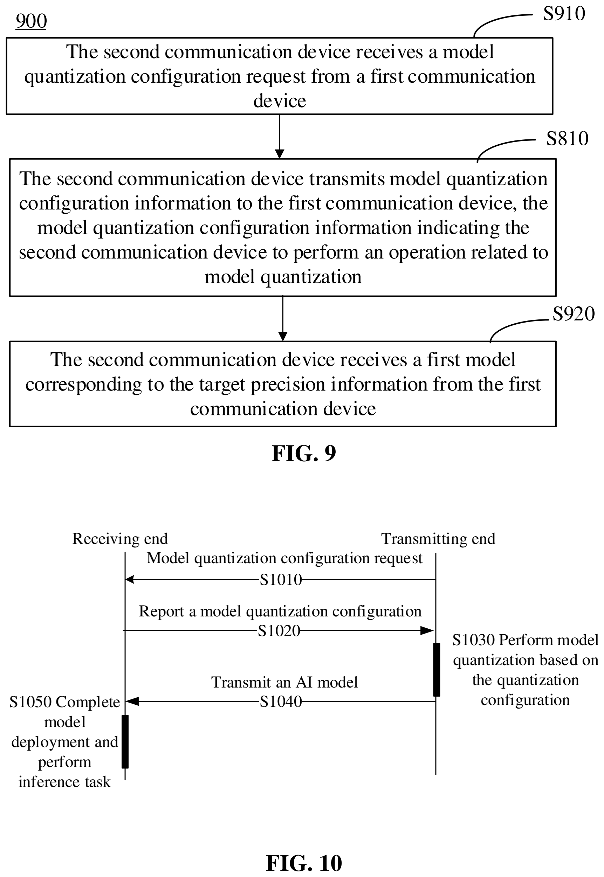

FIG. 9 is a schematic flowchart of a communication method according to another embodiment of the disclosure. The method 900 may include one or more features of the communication method in the above embodiment. In an implementation, the model quantization configuration information includes target precision information.

In an implementation, the target precision information includes one or more of: a target quantization precision of an activation parameter, a target quantization precision of a bias parameter, or a target quantization precision of a weight parameter.

In an implementation, as illustrated in FIG. 9, the method may further include an operation S910.

At S910, the second communication device receives a model quantization configuration request from the first communication device.

In an implementation, as illustrated in FIG. 9, the method may further include an operation S920.

At S920, the second communication device receives a first model corresponding to the target precision information from the first communication device.

In an implementation, a model quantization precision supported by the first communication device includes one or more of: a quantization precision of the activation parameter, a quantization precision of the bias parameter, or a quantization precision of the weight parameter.

In an implementation, the first model is obtained based on a model trained by the first communication device or a sub-model of the model trained by the first communication device.

In an implementation, the first communication device is a network device, and the second communication device is a terminal device.

In an implementation, the first model is an encoder model of a CSI model, and the CSI model is trained on the network device and is deployed on the network device and/or the terminal device.

In an implementation, the first communication device is a terminal device, and the second communication device is a network device.

In an implementation, the first model is a decoder model of a CSI model, and the CSI model is trained on the terminal device and is deployed on the network device and/or the terminal device.

In an implementation, the first communication device is a first terminal device, and the second communication device is a second terminal device.

In an implementation, the first model is an encoder model and/or a decoder model of a CSI model, and the CSI model is trained on the first terminal device and is deployed on the first terminal device and/or the second terminal device.

Specific examples of the communication method 900 performed by the second communication device in the embodiment may refer to the description related to the second communication device in the above-described embodiments of the communication method performed by the first communication device, and details will not be elaborated herein again for the sake of brevity.

The communication method according to the embodiments of the disclosure may include a method for indicating AI model quantization, as illustrated in FIG. 10. In a process of AI model transmission, before a transmitting end transmits an AI model to a receiving end, the receiving end may transmit configuration information to the transmitting end to indicate the model quantization. For example, an AIMQIC reporting process in the workflow of the AI framework may be performed before the AI model is deployed. In the method for indicating AI model quantization, one or more of the following operations may be performed.

At S1010, a transmitting entity firstly reports an AI model quantization configuration request to a receiving entity (optional). The model quantization configuration may also be referred to as a model quantization indication.

At S1020, the receiving entity reports AI model quantization configuration information (AIMQIC) to the transmitting entity.

At S1030, the transmitting entity performs an operation related to model quantization based on the received model quantization configuration information, and queries an AI model of a target precision type. If the AI model of the target precision type is found, S1040 is directly performed. If no AI models of the target precision type are found, AI model quantization is performed, which converts an AI model of an existing precision type to a quantized AI model.

At S1040, the AI model of the target precision type is transmitted to the receiving entity.

At S1050, the receiving entity receives the AI model that matches the AIMQIC requirement in S1020, and completes deployment and subsequent inference tasks.

The above process may be applied to different use cases, and the specific reporting content may also take various forms. Different AIMQIC forms under different model transmission schemes are introduced in detail below.

### Example 1: AI model quantization in an AI solution with single-side training and dual-side deployment

Example 1-1: training on the NW side and deployment on the UE and NW sides separately. This example is illustrated by taking AI channel state information feedback as an example.

In an example, a basic network structure for the AI channel state information feedback may include a model structure consisting of an encoder and a decoder.

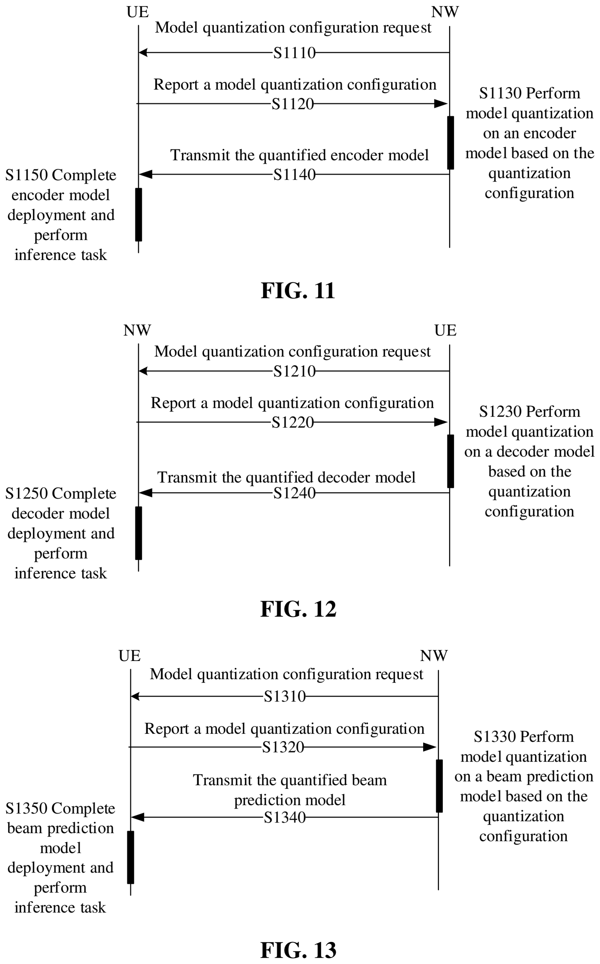

This example proposes a method for indicating AI model quantization in a channel state feedback scheme in which training is only performed on the NW side, as illustrated in FIG. 11.

The CSI models (the encoder model and the decoder model) in this example are all trained on the NW side, and the encoder model needs to be deployed on the UE side, so the NW needs to transmit the encoder model to the UE side. Before the encoder model is transmitted, the AIMQIC needs to be reported to request a quantized encoder model. An example of a specific process is illustrated as follows.

At S1110, the NW transmits an AI model quantization configuration request to the UE through DCI. This operation is optional, and the UE may be directly triggered to perform S1120 while the CSI service is triggered.

At S1120, the UE reports AIMQIC to the NW through uplink control information (UCI). Specifically, this example may support the following two quantization data types, and may be represented by 1 bit in AIMQIC:
1: Int8 (QuantType.QInt8): a signed 8-bit integer; and
0: UInt8 (QuantType.QUInt8): an unsigned 8-bit integer.

Other data types or more data types may also be supported, and accordingly, more bits may be used in AIMQIC to represent them.

At S1130, the NW parses, based on the received AIMQIC, the target quantization precision: either Int8 or UInt8. The NW checks whether there is an encoder model that matches the precision type requirement in the AIMQIC, if the encoder model that matches the precision type requirement is found, the NW directly performs S1140; and if the encoder model that matches the target precision type is not found, quantization is performed on the encoder model, and the encoder model in NW is converted to the encoder model of the target precision type.

The specific quantization algorithm is not limited by the embodiments of the disclosure, and an appropriate numerical quantization algorithm may be selected as needed.

At S1140, the NW transmits the encoder model of the target precision type to the UE.

At S1150, the UE receives the encoder model that matches the AIMQIC requirement in S1120, and completes the deployment and subsequent inference tasks.

In the process of AI model transmission, the UE guides the NW to perform the AI model quantization operation by reporting the quantization indication configuration. The size of the quantized AI model may be reduced exponentially, which can greatly reduce an air interface transmission overhead, reduce a hardware memory and storage occupation, reduce a device power consumption, and improve a model inference efficiency.

Example: 1-2: training on the UE side and deployment on the UE and NW sides separately. This example is illustrated by taking AI channel state information feedback as an example.

The method for indicating AI model quantization proposed in the embodiments of the disclosure is not limited to be applied in the case that the NW side transmits the model to the UE side, is also applicable in the case that the UE transmits the AI model to the NW, and the method is compatible with both the uplink and downlink AI model transmissions. Unlike example 1-1, this example proposes a method for indicating AI model quantization in a channel state feedback scheme in which training is only performed on the UE side, as illustrated in FIG. 12.

The CSI models (the encoder model and the decoder model) in this example may be all trained on the UE side, and the decoder model needs to be deployed on the NW side, so the UE needs to transmit the decoder model to the NW side. Before the decoder model is transmitted, the AIMQIC needs to be reported to request a quantized decoder model. An example of a specific process is illustrated as follows.

At S1210, the UE transmits an AI model quantization configuration request to the NW through UCI. This operation is optional, and the NW may be directly triggered to perform S1220 while the CSI service is triggered.

At S1220, the NW reports the AIMQIC to the UE through DCI. Specifically, this example may support the following two quantization data types, and may also support other data types or more data types:
Int8 (QuantType.QInt8): a signed 8-bit integer; and
UInt8 (QuantType.QUInt8): an unsigned 8-bit integer.

Unlike example 1-1, in this example, the model parameters are divided into different types, each of which is selected using a respective target quantization data type. The parameters of a neural network model are divided into the activation parameter and the weight parameter. This example supports different quantization precisions for the activation parameter and the weight parameter of the model, and the data format may be (activation: uint8, weight: uint8), (activation: uint8, weight: int8), etc.

Accordingly, 2 bits in the AIMQIC may be used to indicate the data format:
00: U8U8, an abbreviation for (activation: uint8, weight: uint8);
01: U8S8, an abbreviation for (activation: uint8, weight: int8);
10: S8U8, an abbreviation for (activation: int8, weight: uint8); and
11: S8S8, an abbreviation for (activation: int8, weight: int8).

The AIMQIC is not limited to the above settings, and fewer or more bits may be used to represent coarser or finer model quantization precision requirements. The above-described values of the AIMQIC and the corresponding precision types may vary, for example, 01 may correspond to U8U8, 00 may correspond to U8S8, etc.

At S1230, the UE parses, based on the received AIMQIC, the target quantization precision: one of U8U8, U8S8, S8U8 and S8S8. The UE searches for a decoder model that matches the precision type requirement in the AIMQIC, if the decoder model that matches the precision type requirement is found, the UE directly performs S1240; and if the decoder model that matches the target precision type is not found, the quantization is performed on the decoder model, and the decoder model in the UE is converted to the decoder model of the target precision type.

The specific quantization algorithm is not limited by the embodiments of the disclosure, and an appropriate numerical quantization algorithm may be selected as needed.

At S1240, the UE transmits the decoder model of the target precision type to the NW.

At S1250, the NW receives the decoder model that matches the AIMQIC requirement in S1220, and completes the deployment and subsequent inference tasks.

In the process of the AI model transmission, the NW guides the UE to perform the AI model quantization operation by reporting the quantization indication configuration. The size of the quantized AI model may be reduced exponentially, which can greatly reduce an air interface transmission overhead, reduce a hardware memory and storage occupation, reduce a device power consumption, and improve a model inference efficiency.

Example 2: AI model quantization in an AI solution with single-side training and single-side deployment

Example 2-1: training on the NW side and deployment on the UE side. The AI beam management is taken as an example to illustrate this example.

In an example, the method in the embodiments of the disclosure may be used in an AI beam management process. An AI model quantization workflow in an AI-based beam prediction scheme is illustrated in FIG. 13.

A beam prediction model in this example is required to be trained on the NW side, and deployed on the UE side, so the NW needs to transmit the model to the UE side. Before the model is transmitted, an AIMQIC needs to be reported to request a quantized model, and a specific process is illustrated as follows.

At S1310, the NW transmits an AI model quantization configuration request to the UE through DCI. This operation is optional, and the NW may be directly triggered to perform S1320 while the service is triggered.

At S1320, the UE reports, based on the received AI model quantization configuration request, AI model quantization configuration information (i.e., AIMQIC) to the NW through UCI. Specifically, unlike the example 1-1, this example may support the following quantization data types, and the model parameters may not be subdivided into the weight parameter and the activation parameter. 2 bits may be used in the AIMQIC to indicate the quantization data types.
00: Int8 (QuantType.QInt8): a signed 8-bit integer;
01: UInt8 (QuantType.QUInt8): an unsigned 8-bit integer;
10: Float8 (QuantType.QFloat8): an 8-bit single-precision floating point type; and
11: Float16 (QuantType.QFloat16): a 16-bit single-precision floating point type.

The AIMQIC is not limited to the above settings, and fewer or more bits may be used to represent coarser or finer model quantization precision requirements. The above-described values in the AIMQIC and the corresponding precision types may vary, for example, 01 may correspond to Int8, and 00 may correspond to UInt8, etc.

At S1330, the NW parses, based on the received AIMQIC, the target quantization precision: one of Int8, UInt8, Float8 and Float16. The NW searches for a beam prediction model that matches the precision type requirement in the AIMQIC, if the beam prediction model that matches the precision type requirement is found, S1340 is directly performed; and if the beam prediction model that matches the target precision type is not found, the model quantization is performed, which converts an existing model to a model of the target precision type.

The specific quantization algorithm is not limited by the embodiments of the disclosure, and an appropriate numerical quantization algorithm may be selected as needed.

At S1340, the NW transmits the beam prediction model of the target precision type to the UE.

At S1350, the UE receives the beam prediction model that matches the AIMQIC requirement in S1320, and completes the deployment and subsequent inference tasks.

In the process of the AI model transmission, the UE guides the NW to perform the AI model quantization operation by reporting the quantization indication configuration. The size of the quantized AI model may be reduced exponentially, which can greatly reduce an air interface transmission overhead, reduce a hardware memory and storage occupation, reduce a device power consumption, and improve a model inference efficiency.

Example 2-2: training on the UE side and deployment on the NW side. The AI beam management is taken as an example to illustrate this example.

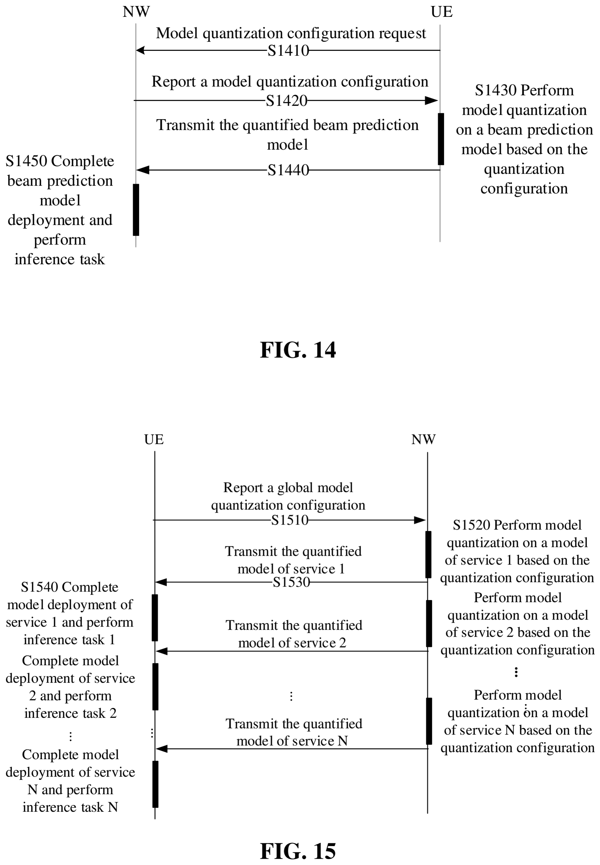

Unlike the example 2-1, in this example, the UE may transmit the AI model to the NW, as illustrated in FIG. 14.

Unlike the example 2-1, the UE, as the model training side, may transmit the quantized model to the NW, the basic operations S1410 to S1440 are similar to the operations of the example 2-1 except for the execution entity, and details will not be elaborated again.

In the operation S1420, the AIMQIC may also support different quantization precisions for finer parameter grouping of the model. The model parameters may be subdivided into three portions: the activation parameter, the bias parameter, and the weight parameter, each of which supports the following two quantization data types:
Int8 (QuantType.QInt8): a signed 8-bit integer; and
UInt8 (QuantType.QUInt8): an unsigned 8-bit integer.

Accordingly, 3 bits may be used in the AIMQIC to indicate the data types:
000: U8U8U8, (activation: uint8, bias: uint8, weight: uint8);
001: U8U8S8, (activation: uint8, bias: uint8, weight: int8);
010: U8S8U8, (activation: uint8, bias: int8, weight: uint8);
011: U8S8S8, (activation: uint8, bias: int8, weight: int8);
100: S8U8U8, (activation: int8, bias: uint8, weight: uint8);
101: S8U8S8, (activation: int8, bias: uint8, weight: int8);
110: S8S8U8, (activation: int8, bias: int8, weight: uint8); and
111: S8S8S8, (activation: int8, bias: int8, weight: int8).

The AIMQIC is not limited to the above settings, and fewer or more bits may be used to represent coarser or finer model quantization precision requirements. The above-described values in the AIMQIC and the corresponding precision types may vary, for example, 01 may correspond to Int8, and 00 may correspond to UInt8, etc.

The single-side training scenario may also include training on the NW side and deployment on the NW side, or training on the UE side and deployment on the UE side. In both cases, the model may not be transmitted, the model quantization is decided by single-side, and the interaction of AI model quantization information is not involved.

### Example 3: a global AI model quantization indication scheme

The method for indicating AI model quantization according to the embodiment of the disclosure is not limited to one or more use cases (i.e., is not use case-specific). For example, the method may include a user-specific AI model quantization indication, and the workflow is illustrated in FIG. 15.

At S1510, the UE reports global model quantization configuration information to the NW.

At S1520, the NW performs model quantization on a model of a service 1 based on the quantization configuration information.

At S1530, the NW transmits the quantized model of the service 1 to the UE.

At S1540, the UE completes a model deployment of the service 1, and performs an inference task 1 of the model for the service 1.

If there are other services, such as service 2, service 3, ..., and service N, the operations S1520 to S1540 may be referenced.

In this example, no specific AI task is required to trigger the AIMQIC request, but the UE may actively transmit the AIMQIC to the NW after the UE accesses the NW. The AIMQIC guides the quantization of all AI models that need to be transmitted to the UE.

The AIMQIC may be reported autonomously through the UCI, or may be reported together with an indication configuration of the UE capability.

In the process of the AI model transmission, the UE guides the NW to perform the AI model quantization operation by reporting the quantization indication configuration. The size of the quantized AI model may be reduced exponentially, which can greatly reduce an air interface transmission overhead, reduce a hardware memory and storage occupation, reduce a device power consumption, and improve a model inference efficiency.

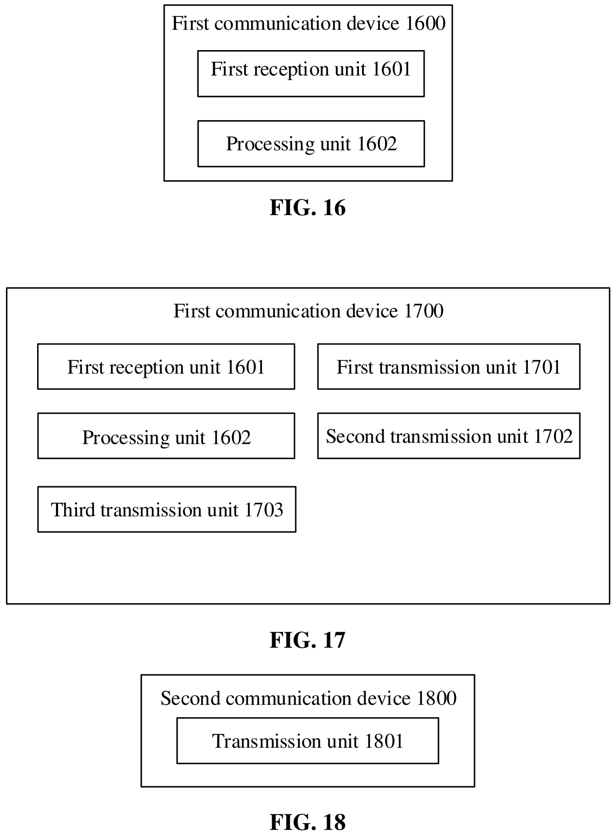

FIG. 16 is a schematic block diagram of a first communication device 1600 according to an embodiment of the disclosure. The first communication device 1600 includes a reception unit 1601 and a processing unit 1602.

The reception unit 1601 is configured to receive model quantization configuration information from a second communication device.

The processing unit 1602 is configured to perform an operation related to model quantization based on the model quantization configuration information.

In an implementation, the model quantization configuration information includes target precision information.

In an implementation, the target precision information includes one or more of: a target quantization precision of an activation parameter, a target quantization precision of a bias parameter, or a target quantization precision of a weight parameter.

In an implementation, as illustrated in FIG. 17, the first communication device 1700 may further include a first transmission unit 1701.

The first transmission unit 1701 is configured to: when the first communication device includes a first model corresponding to the target precision information, transmit the first model and/or a parameter of the first model to the second communication device. For example, the processing unit may check whether there is a first model that matches the target precision information, and if there is a first model that matches the target precision information, the processing unit may indicate the first transmission unit 1603 to transmit the first model and/or the parameter of the first model corresponding to the target precision information.

In an implementation, the processing unit 1602 is further configured to: when the first communication device includes no first model corresponding to the target precision information, convert a second model to the first model based on the target precision information.

The first communication device further includes a second transmission unit 1702, configured to transmit the first model and/or a parameter of the first model to the second communication device.

In an implementation, the first communication device may further include a third transmission unit 1703.

The third transmission unit 1703 is configured to transmit a model quantization configuration request to the second communication device.

In an implementation, the model quantization precision supported by the first communication device includes one or more of: a quantization precision of the activation parameter, a quantization precision of the bias parameter, or a quantization precision of the weight parameter.

In an implementation, the first model is obtained based on a model trained by the first communication device or a sub-model of the model trained by the first communication device.

In an implementation, the first communication device is a network device, and the second communication device is a terminal device.

In an implementation, the first model is an encoder model of a CSI model, and the CSI model is trained on the network device and is deployed on the network device and/or the terminal device.

In an implementation, the first communication device is a terminal device, and the second communication device is a network device.

In an implementation, the first model is a decoder model of a CSI model, and the CSI model is trained on the terminal device and is deployed on the network device and/or the terminal device.

In an implementation, the first communication device is a first terminal device, and the second communication device is a second terminal device.

In an implementation, the first model is an encoder model and/or a decoder model of a CSI model, and the CSI model is trained on the first terminal device and is deployed on the first terminal device and/or the second terminal device.

The first communication devices 1600 and 1700 according to the embodiments of the disclosure may realize the functions corresponding to the first communication device in the above-described method embodiments. Flows, functions, implementations, and beneficial effects corresponding to various modules (sub-modules, units, components, etc.) in the first communication device may refer to the description corresponding to the above-described method embodiments, which will not be elaborated herein again. It is noted that the functions described with respect to various modules (sub-modules, units, components, etc.) in the first communication device of the embodiments of the disclosure may be implemented by different modules (sub-modules, units, components, etc.), or may be implemented by a same module (submodule, unit, component, etc.).

FIG. 18 is a schematic block diagram of a second communication device 1800 according to an embodiment of the disclosure. The second terminal device 1800 includes a transmission unit 1801.

The transmission unit 1801 is configured to transmit model quantization configuration information to a first communication device, the model quantization configuration information indicating the second communication device to perform an operation related to model quantization.

In an implementation, the model quantization configuration information includes target precision information.

In an implementation, the target precision information includes one or more of: a target quantization precision of an activation parameter, a target quantization precision of a bias parameter, or a target quantization precision of a weight parameter.

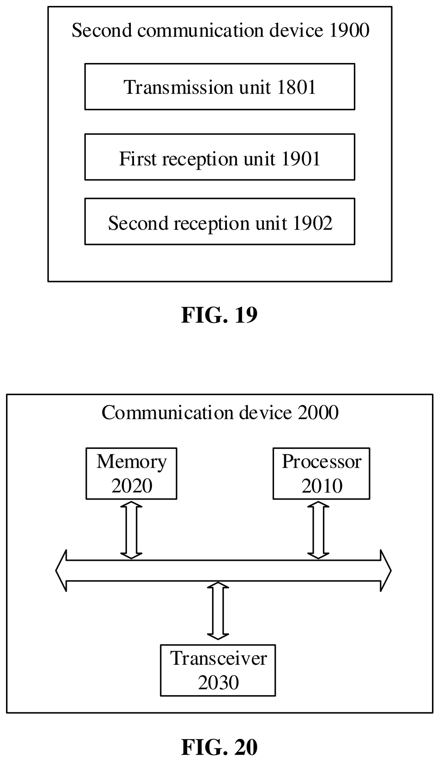

In an implementation, as illustrated in FIG. 19, the second communication device 1900 may further include a first reception unit 1901.

The first reception unit 1901 is configured to receive a first model corresponding to the target precision information from the first communication device.

In an implementation, the second communication device may further include a second reception unit 1902.

The second reception unit 1902 is configured to receive a model quantization configuration request from the first communication device.

In an implementation, the model quantization precision supported by the first communication device includes one or more of: a quantization precision of the activation parameter, a quantization precision of the bias parameter, or a quantization precision of the weight parameter.

In an implementation, the first model is obtained based on a model trained by the first communication device or a sub-model of the model trained by the first communication device.

In an implementation, the first communication device is a network device, and the second communication device is a terminal device.

In an implementation, the first model is an encoder model of a CSI model, and the CSI model is trained on the network device and is deployed on the network device and/or the terminal device.

In an implementation, the first communication device is a terminal device, and the second communication device is a network device.

In an implementation, the first model is a decoder model of a CSI model, and the CSI model is trained on the terminal device and is deployed on the network device and/or the terminal device.

In an implementation, the first communication device is a first terminal device, and the second communication device is a second terminal device.

In an implementation, the first model is an encoder model and/or a decoder model of a CSI model, and the CSI model is trained on the first terminal device and is deployed on the first terminal device and/or the second terminal device.

The second communication devices 1800 and 1900 according to the embodiments of the disclosure may realize the functions corresponding to the second communication device in the above-described method embodiments. Flows, functions, implementations, and beneficial effects corresponding to various modules (sub-modules, units, components, etc.) in the second communication device may refer to the description corresponding to the above-described method embodiments, which will not be elaborated herein again. It is noted that the functions described with respect to various modules (sub-modules, units, components, etc.) in the second communication device of the embodiments of the disclosure may be implemented by different modules (sub-modules, units, components, etc.), or may be implemented by a same module (submodule, unit, component, etc.).

FIG. 20 is a schematic structural diagram of a communication device 2000 according to an embodiment of the disclosure. The communication device 2000 includes a processor 2010. The processor 2010 may be configured to call a computer program from a memory and run the computer program, to cause the communication device 2000 to perform the methods in the embodiments of the disclosure.

In an implementation, the communication device 2000 may further include a memory 2020. The processor 2010 may be configured to call the computer program from the memory 2020 and run the computer program, to cause the communication device 2000 to perform the methods in the embodiments of the disclosure.

The memory 2020 may be a separate device independent from the processor 2010, or may be integrated into the processor 2010.

In an implementation, the communication device 2000 may further include a transceiver 2030. The processor 2010 may control the transceiver 2030 to communicate with other devices, specifically, to transmit information or data to other devices, or receive information or data from other devices.

The transceiver 2030 may include a transmitter and a receiver. The transceiver 2030 may further include an antenna, and there may be one or more antennas.

In an implementation, the communication device 2000 may be the first communication device in the embodiments of the disclosure. The communication device 2000 may perform corresponding flows that are implemented by the first communication device in various methods in the embodiments of the disclosure. For brevity, details are not elaborated herein again.

In an implementation, the communication device 2000 may be the second communication device in the embodiments of the disclosure. The communication device 2000 may perform corresponding flows that are implemented by the second communication device in various methods in the embodiments of the disclosure. For brevity, details are not elaborated herein again.

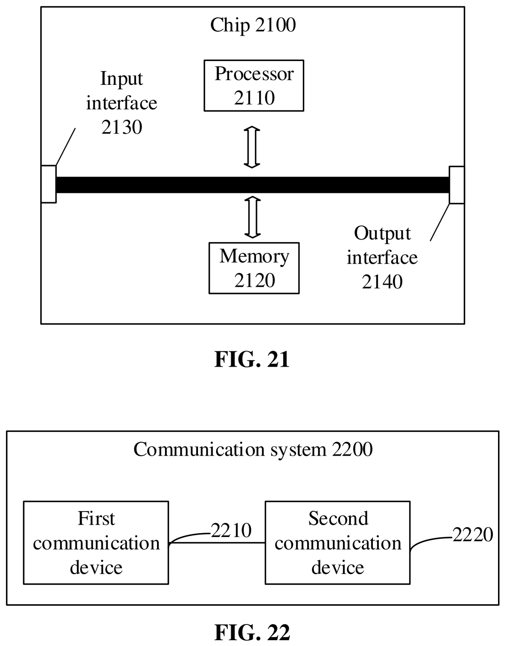

FIG. 21 is a schematic structural diagram of a chip 2100 according to an embodiment of the disclosure. The chip 2100 includes a processor 2110. The processor 2110 may be configured to call a computer program from a memory and run the computer program to perform the methods in the embodiments of the disclosure.

In an implementation, the chip 2100 may further include a memory 2120. The processor 2110 may be configured to call the computer program from the memory 2120 and run the computer program, to perform the method performed by the first communication device or the method performed by the second communication device in the embodiments of the disclosure.

The memory 2120 may be a separate device independent from the processor 2110, or may be integrated into the processor 2110.

In an implementation, the chip 2100 may further include an input interface 2130. The processor 2110 may control the input interface 2130 to communicate with other devices or chips, specifically, to obtain information or data from other devices or chips.

In an implementation, the chip 2100 may further include an output interface 2140. The processor 2110 may control the output interface 2140 to communicate with other devices or chips, specifically, to output information or data to other devices or chips.

In an implementation, the chip may be applied in the first communication device in the embodiments of the disclosure. The chip may perform corresponding flows that are performed by the first communication device in various methods in the embodiments of the disclosure. For brevity, details are not elaborated herein again.

In an implementation, the chip may be applied in the second communication device in the embodiments of the disclosure. The chip may perform corresponding flows that are performed by the second communication device in various methods in the embodiments of the disclosure. For brevity, details are not elaborated herein again.

The chips applied to the first communication device and the second communication device may be the same chip or different chips.

It should be understood that, the chip mentioned in the embodiments of the disclosure may also be referred to as a system-level chip, a system chip, a chip system or a system on chip, etc.

The processor mentioned above may be a general-purpose processor, a digital signal processor (DSP), a field programmable gate array (FPGA), an application specific integrated circuit (ASIC), another programmable logical device, a transistor logical device, a discrete hardware component or the like. The general-purpose processor mentioned above may be a microprocessor or any conventional processor and the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that, the foregoing memory is exemplary but not for limitation. For example, the memory in the embodiments of the disclosure may be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) or a direct rambus RAM (DR RAM), etc. It should be noted that, the memory in the embodiments of the disclosure aims to include but not be limited to these memories and any other suitable types of memories.

FIG. 22 is a schematic block diagram of a communication system 2200 according to an embodiment of the disclosure. The communication system 2200 includes a first communication device 2210 and a second communication device 2220.

The first communication device 2210 is configured to receive model quantization configuration information from the second communication device, and perform an operation related to model quantization based on the model quantization configuration information.

The second communication device 2220 is configured to transmit the model quantization configuration information to the first communication device, the model quantization configuration information indicating the second communication device to perform the operation related to the model quantization.

The first communication device 2210 may be configured to implement corresponding functions that are implemented by the first communication device in the above methods. The second communication device 2220 may be configured to implement corresponding functions that are implemented by the second communication device in the above methods. For the sake of brevity, details will not be elaborated herein again.

The above embodiments may be implemented in whole or in part by software, hardware, firmware or any combination thereof. When implemented in the form of software, the embodiments may be implemented in whole or in part in the form of a computer program product. The computer program product includes one or more computer instructions. When the computer program instructions are loaded and executed on a computer, all or part of the processes or functions described in accordance with the embodiments of the disclosure are generated. The computer may be a general-purpose computer, a special-purpose computer, a computer network, or other programmable devices. The computer instructions may be stored in a computer-readable storage medium or transmitted from a computer-readable storage medium to another computer-readable storage medium. For example, the computer instructions may be transmitted from a web site, a computer, a server, or a data center to another web site, computer, server, or data center through a wired (e.g. a coaxial cable, an optical fiber, a digital subscriber line (DSL)) or wireless (e.g. an infrared, a wireless, a microwave, etc.) form. The computer-readable storage medium may be any available medium accessible to a computer or a data storage device such as a server, a data center, or the like that integrated with one or more available mediums. The available medium may be a magnetic medium (e.g. a floppy disk, a hard disk, a magnetic tape), an optical medium (e.g. a digital versatile disc (DVD)), or a semiconductor medium (e.g. a solid state disk (SSD)), etc.

It should be understood that in various embodiments of the disclosure, an order of the serial numbers of the above-mentioned processes does not imply an execution order, and the execution order of various processes are determined based on their functions and inherent logics, and should not constitute any limitation on the implementation process of the embodiments of the disclosure.

It may be clearly understood by those skilled in the art that, for the purpose of convenient and brief description, the detailed working processes of the foregoing systems, apparatuses, and units may refer to the corresponding processes in the foregoing method embodiments, and details are not elaborated herein again.

The foregoing descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure shall be subject to the scope of protection of the claims.

## Claims

1. A communication method, comprising:
receiving, by a first communication device, model quantization configuration information from a second communication device; and
performing, by the first communication device, an operation related to model quantization based on the model quantization configuration information.

2. The method of claim 1, wherein the model quantization configuration information comprises target precision information.

3. The method of claim 2, wherein the target precision information comprises one or more of: a target quantization precision of an activation parameter, a target quantization precision of a bias parameter, or a target quantization precision of a weight parameter.

4. The method of claim 2 or 3, wherein performing, by the first communication device, the operation related to the model quantization based on the model quantization configuration information comprises:
when the first communication device comprises a first model corresponding to the target precision information, transmitting the first model and/or a parameter of the first model to the second communication device.

5. The method of any one of claims 2 to 4, wherein performing, by the first communication device, the operation related to the model quantization based on the model quantization configuration information comprises:
when the first communication device comprises no first model corresponding to the target precision information, converting a second model to the first model based on the target precision information; and
transmitting, by the first communication device, the first model and/or a parameter of the first model to the second communication device.

6. The method of any one of claims 1 to 5, further comprising:
transmitting, by the first communication device, a model quantization configuration request to the second communication device.

7. The method of any one of claims 1 to 6, wherein a model quantization precision supported by the first communication device comprises one or more of: a quantization precision of an activation parameter, a quantization precision of a bias parameter, or a quantization precision of a weight parameter.

8. The method of any one of claims 1 to 7, wherein the first model is obtained based on a model trained by the first communication device or a sub-model of the model trained by the first communication device.

9. The method of any one of claims 1 to 8, wherein the first communication device is a network device, and the second communication device is a terminal device.

10. The method of claim 9, wherein the first model is an encoder model of a channel state information (CSI) model, and the CSI model is trained on the network device and is deployed on the network device and/or the terminal device.

11. The method of any one of claims 1 to 8, wherein the first communication device is a terminal device, and the second communication device is a network device.

12. The method of claim 11, wherein the first model is a decoder model of a CSI model, and the CSI model is trained on the terminal device and is deployed on the network device and/or the terminal device.

13. The method of any one of claims 1 to 8, wherein the first communication device is a first terminal device, and the second communication device is a second terminal device.

14. The method of claim 13, wherein the first model is an encoder model and/or a decoder model of a CSI model, and the CSI model is trained on the first terminal device and is deployed on the first terminal device and/or the second terminal device.

15. A communication method, comprising:
transmitting, by a second communication device, model quantization configuration information to a first communication device, the model quantization configuration information indicating the second communication device to perform an operation related to model quantization.

16. The method of claim 15, wherein the model quantization configuration information comprises target precision information.

17. The method of claim 16, wherein the target precision information comprises one or more of: a target quantization precision of an activation parameter, a target quantization precision of a bias parameter, or a target quantization precision of a weight parameter.

18. The method of claim 16 or 17, further comprising:
receiving, by the second communication device, a first model corresponding to the target precision information from the first communication device.

19. The method of any one of claims 15 to 18, further comprising:
receiving, by the second communication device, a model quantization configuration request from the first communication device.

20. The method of any one of claims 15 to 19, wherein a model quantization precision supported by the first communication device comprises one or more of: a quantization precision of an activation parameter, a quantization precision of a bias parameter, or a quantization precision of a weight parameter.

21. The method of any one of claims 15 to 20, wherein the first model is obtained based on a model trained by the first communication device or a sub-model of the model trained by the first communication device.

22. The method of any one of claims 15 to 21, wherein the first communication device is a network device, and the second communication device is a terminal device.

23. The method of claim 22, wherein the first model is an encoder model of a channel state information (CSI) model, and the CSI model is trained on the network device and is deployed on the network device and/or the terminal device.

24. The method of any one of claims 15 to 21, wherein the first communication device is a terminal device, and the second communication device is a network device.

25. The method of claim 24, wherein the first model is a decoder model of a CSI model, and the CSI model is trained on the terminal device and is deployed on the network device and/or the terminal device.

26. The method of any one of claims 15 to 21, wherein the first communication device is a first terminal device, and the second communication device is a second terminal device.

27. The method of claim 26, wherein the first model is an encoder model and/or a decoder model of a CSI model, and the CSI model is trained on the first terminal device and is deployed on the first terminal device and/or the second terminal device.

28. A first communication device, comprising:
a reception unit, configured to receive model quantization configuration information from a second communication device; and
a processing unit, configured to perform an operation related to model quantization based on the model quantization configuration information.

29. The first communication device of claim 28, wherein the model quantization configuration information comprises target precision information.

30. The first communication device of claim 29, wherein the target precision information comprises one or more of: a target quantization precision of an activation parameter, a target quantization precision of a bias parameter, or a target quantization precision of a weight parameter.

31. The first communication device of claim 29 or 30, further comprising:
a first transmission unit, configured to: when the first communication device comprises a first model corresponding to the target precision information, transmit the first model and/or a parameter of the first model to the second communication device.

32. The first communication device of any one of claims 29 to 31, wherein the processing unit is further configured to: when the first communication device comprises no first model corresponding to the target precision information, convert a second model to the first model based on the target precision information; and
the first communication device further comprises a second transmission unit, configured to transmit the first model and/or a parameter of the first model to the second communication device.

33. The first communication device of any one of claims 28 to 32, further comprising:
a third transmission unit, configured to transmit a model quantization configuration request to the second communication device.

34. The first communication device of any one of claims 28 to 33, wherein a model quantization precision supported by the first communication device comprises one or more of: a quantization precision of an activation parameter, a quantization precision of a bias parameter, or a quantization precision of a weight parameter.

35. The first communication device of any one of claims 28 to 34, wherein the first model is obtained based on a model trained by the first communication device or a sub-model of the model trained by the first communication device.

36. The first communication device of any one of claims 28 to 35, wherein the first communication device is a network device, and the second communication device is a terminal device.

37. The first communication device of claim 36, wherein the first model is an encoder model of a channel state information (CSI) model, and the CSI model is trained on the network device and is deployed on the network device and/or the terminal device.

38. The first communication device of any one of claims 28 to 35, wherein the first communication device is a terminal device, and the second communication device is a network device.

39. The first communication device of claim 38, wherein the first model is a decoder model of a CSI model, and the CSI model is trained on the terminal device and is deployed on the network device and/or the terminal device.

40. The first communication device of any one of claims 28 to 35, wherein the first communication device is a first terminal device, and the second communication device is a second terminal device.

41. The first communication device of claim 40, wherein the first model is an encoder model and/or a decoder model of a CSI model, and the CSI model is trained on the first terminal device and is deployed on the first terminal device and/or the second terminal device.

42. A second communication device, comprising:
a transmission unit, configured to transmit model quantization configuration information to a first communication device, the model quantization configuration information indicating the second communication device to perform an operation related to model quantization.

43. The second communication device of claim 42, wherein the model quantization configuration information comprises target precision information.

44. The second communication device of claim 43, wherein the target precision information comprises one or more of: a target quantization precision of an activation parameter, a target quantization precision of a bias parameter, or a target quantization precision of a weight parameter.

45. The second communication device of claim 43 or 44, further comprising:
a first reception unit, configured to receive a first model corresponding to the target precision information from the first communication device.

46. The second communication device of any one of claims 42 to 45, further comprising:
a second reception unit, configured to receive a model quantization configuration request from the first communication device.

47. The second communication device of any one of claims 42 to 46, wherein a model quantization precision supported by the first communication device comprises one or more of: a quantization precision of an activation parameter, a quantization precision of a bias parameter, or a quantization precision of a weight parameter.

48. The second communication device of any one of claims 42 to 47, wherein the first model is obtained based on a model trained by the first communication device or a sub-model of the model trained by the first communication device.

49. The second communication device of any one of claims 42 to 48, wherein the first communication device is a network device, and the second communication device is a terminal device.

50. The second communication device of claim 49, wherein the first model is an encoder model of a channel state information (CSI) model, and the CSI model is trained on the network device and is deployed on the network device and/or the terminal device.

51. The second communication device of any one of claims 42 to 48, wherein the first communication device is a terminal device, and the second communication device is a network device.

52. The second communication device of claim 51, wherein the first model is a decoder model of a CSI model, and the CSI model is trained on the terminal device and is deployed on the network device and/or the terminal device.

53. The second communication device of any one of claims 42 to 48, wherein the first communication device is a first terminal device, and the second communication device is a second terminal device.

54. The second communication device of claim 53, wherein the first model is an encoder model and/or a decoder model of a CSI model, and the CSI model is trained on the first terminal device and is deployed on the first terminal device and/or the second terminal device.

55. A communication device, comprising a processor and a memory for storing a computer program, wherein the processor is configured to call the computer program stored in the memory and run the computer program, to cause the communication device to perform the method of any one of claims 1 to 14 or the method of any one of claims 15 to 27.

56. A chip, comprising a processor configured to call a computer program from a memory and run the computer program, to cause a device mounted with the chip to perform the method of any one of claims 1 to 14 or the method of any one of claims 15 to 27.

57. A computer-readable storage medium having stored thereon a computer program that, when being run on a device, causes the device to perform the method of any one of claims 1 to 14 or the method of any one of claims 15 to 27.

58. A computer program product, comprising computer program instructions that cause a computer to perform the method of any one of claims 1 to 14 or the method of any one of claims 15 to 27.

59. A computer program, wherein the computer program causes a computer to perform the method of any one of claims 1 to 14 or the method of any one of claims 15 to 27.
